# EUROPÄISCHE PATENTSCHRIFT

(11) **EP 2 754 158 B1**
(45) Veröffentlichungstag und Bekanntmachung des Hinweises auf die Patenterteilung: **21.02.2018**
(21) Anmeldenummer: 12751061.8
(22) Anmeldetag: 22.08.2012
(51) Int. Cl.: C02F 1/44, G21F 9/06, G21F 9/12, C02F 1/58, C02F 1/72, C02F 9/00

(54) **VERFAHREN ZUR ABTRENNUNG VON RADIOAKTIVEN NUKLIDEN MITTELS KERAMISCHER FILTERMEMBRANEN**
PROCESS FOR THE SEPARATION OF RADIOACTIVE NUCLIDES BY CERAMIC FILTERMEMBRANES
PROCÉDÉ POUR LA SÉPARATION DES NUCLIDES RADIOACTIFS PAR DES MEMBRANES CÉRAMIQUES

(30) Priorität: 07.09.2011 DE 102011082285
(43) Veröffentlichungstag der Anmeldung: 16.07.2014
(73) Patentinhaber: ITN Nanovation AG, 66123 Saarbrücken (DE)
(72) Erfinder: GABRIEL, Kay, Jeddah 21432 (SA); GRÄNITZ, Christof, 66265 Wahlschied (DE); KASCHEK, Martin, 66386 St. Ingbert (DE); BINKLE, Olaf, 66459 Kirkel (DE)
(74) Vertreter: Patentanwaltskanzlei Cartagena
(86) Internationale Anmeldenummer: PCT/EP2012/066367
(87) Internationale Veröffentlichungsnummer: WO 2013/034442

(56) Entgegenhaltungen:
- EP-A1- 1 820 565
- WO-A1-96/21933
- FR-A1- 2 624 758
- FR-A5- 2 031 844
- US-A- 4 636 367

## Beschreibung

Die vorliegende Erfindung betrifft ein Verfahren zur Gewinnung von Betriebs- oder Trinkwasser aus Wasser, das radioaktive Nuklide enthält.

Wasser ist in vielen Ländern ein kostbares Gut, so etwa in zahlreichen afrikanischen und arabischen Staaten, in denen aufwendige Maßnahmen getroffen werden müssen, um den Bedarf an Trink- und Betriebswasser zu decken. So werden beispielsweise in Saudi Arabien erhebliche Mengen Wasser aus Tiefbrunnen gefördert oder über Meerwasserentsalzungsanlagen bereitgestellt. Problematisch ist allerdings, dass Wasser aus Tiefbrunnen häufig sehr hohe Anteile an radioaktiven Nukliden und Schwermetallsalzen wie Eisen- und Mangansalzen enthält. In Wasser aus Tiefbrunnen findet man insbesondere die Isotope ²²⁶Ra und ²²⁸Ra, aber auch das an die gleiche Zerfallskette gebundene ²²⁸Th. Diese werden insbesondere durch den Zerfall von natürlich vorkommendem Uran gebildet. Im Tiefengrundwasser sind die radioaktiven Nuklide in der Regel zum einen in Form von gelösten Ionen und zum anderen gebunden an feine mineralische Schwebstoffe enthalten.

Aufgereinigt wird Tiefengrundwasser üblicherweise mittels Umkehrosmoseverfahren, durch die große Teile der im Wasser enthaltenen ionischen Fracht abgetrennt werden können. Damit die dabei zum Einsatz kommenden Umkehrosmosemembranen nicht zu stark belastet werden, sind der Aufreinigung mittels Umkehrosmose üblicherweise mehrere Vorreinigungsschritte vorgeschaltet. Dabei handelt es sich insbesondere um Filtrationsschritte, bei denen die erwähnten im Wasser enthaltenen Schwebeteilchen sowie ausgefällte Schwermetallverbindungen und die daran gebundenen radioaktiven Nuklide abgetrennt werden sollen. In Saudi Arabien werden hierfür bislang tonnenschwere Sandfilter verwendet. Solche Sandfilter haben diverse Nachteile. So erreichen sie nicht unmittelbar nach Inbetriebnahme ihre volle Leistungsfähigkeit, stattdessen müssen sie erst unter großem Aufwand eingefahren werden. Nach einigen Monaten (in der Regel bis zu maximal 20 Monaten) haben sich in den Sandfiltern regelmäßig derart hohe Mengen an radioaktiven Nukliden festgesetzt, dass die Filter ersetzt werden müssen. Eine Regeneration der Filter ist nicht praktikabel, ihre Entsorgung ist allein aufgrund der außerordentlich großen Mengen an kontaminiertem Sand problematisch.

Die im Tiefengrundwasser enthaltenen Radium- oder Thorium-Ionen werden allein durch einen Sandfilter nur unzureichend abgetrennt. Man versucht deshalb, die Ionen auf chemische Weise auszufällen, bevor das Tiefengrundwasser in den Sandfilter eintritt. Der ausfallende radioaktive Niederschlag kann dann im Sandfilter zurückgehalten werden. Die gebräuchlichste Variante der Ausfällung besteht in der Zugabe von wasserlöslichen Bariumsalzen, beispielsweise von Bariumchlorid. In der Regel enthalten die aufzureinigenden Tiefengrundwässer auch Sulfat-Ionen. Dadurch bedingt kann beispielsweise das im Wasser enthaltene Radium nach der Zugabe des Bariumchlorids als Ba(Ra)SO₄ ausfallen. Entsprechende Vorgehensweisen finden sich beispielsweise in den Patentschriften US 4,636,367, US 4,423,007 und US 4,265,861. Nachteilhaft ist allerdings, dass z.B. Bariumchlorid giftig und sehr teuer ist. Außerdem können Bariumionen bei unvollständiger Fällung in nachgeschaltete Umkehrosmose-Einrichtungen verschleppt werden. Hohe Konzentrationen an Barium-Ionen können zu einer Schädigung der in den Einrichtungen angeordneten Umkehrosmosemembranen führen.

Eine Vorgehensweise zur Aufreinigung von radioaktiv kontaminiertem Wasser ist aus der FR 2624758 A1 bekannt. Hierbei kommt eine zylinderförmige Keramikfiltermembran, in der eine Kartusche aus einem Polyurethanschaum angeordnet ist, zum Einsatz. Teilweise besteht die Filtermembran aus Mangandioxid.

Die FR 2031844 A5 beschreibt das Ausfällen radioaktiver Nuklide mittels Mangansalzen. Nicht erwähnt sind in der Patentschrift hingegen keramische Filtermembranen.

Die WO 96/21933 betrifft ein Verfahren zur Verminderung radioaktiver Abfälle, die in Kernkraftwerken und militärischen Forschungszentren anfallen können. Beschrieben wird eine chemische Ausfällung radioaktiver Nuklide gefolgt von einer Abscheidung der ausgefällten Nuklide mittels einer Zentrifuge. Das Verfahren ist nicht auf die Gewinnung von Trinkwasser gerichtet.

Der vorliegenden Erfindung lag die Aufgabe zugrunde, die bislang praktizierten Vorgehensweisen zur Entfernung von radioaktiven Nukliden aus Tiefengrundwässern deutlich zu verbessern.

Diese Aufgabe wird gelöst durch das Verfahren mit den Merkmalen des Anspruchs 1 und die Anlage mit den Merkmalen des Anspruchs 7. Bevorzugte Ausführungsformen des erfindungsgemäßen Verfahrens sind in den abhängigen Ansprüchen 2 bis 6 angegeben. Der Wortlaut sämtlicher Ansprüche wird hiermit durch Bezugnahme zum Inhalt der vorliegenden Beschreibung gemacht.

Das erfindungsgemäße Verfahren dient der Gewinnung von Betriebsoder Trinkwasser aus Wasser, das radioaktive Nuklide wie z.B. die eingangs genannten Radium- und Thoriumisotope enthält, insbesondere aus radiumhaltigem Grundwasser. Betriebswasser ist im Gegensatz zu Trinkwasser nicht für den Verzehr geeignet, muss jedoch dennoch bestimmte Qualitätskriterien erfüllen, damit es im privaten, gewerblichen oder landwirtschaftlichen Bereich zum Einsatz kommen kann. Radioaktivität ist diesbezüglich ein Ausschlusskriterium, eine Kontaminierungsgrenze von 10 pCi/l, hervorgerufen durch radioaktive Nuklide, sollte nicht überschritten werden. In manchen Fällen beträgt der Grenzwert nur 5 pCi/l.

Das erfindungsgemäße Verfahren umfasst stets die folgenden Behandlungsschritte, nämlich
- eine chemische Vorbehandlung des radioaktive Nuklide enthaltenden Wassers und
- eine Filtration des chemisch vorbehandelten Wassers.

Besonders zeichnet sich das erfindungsgemäße Verfahren dadurch aus, dass im Rahmen der chemischen Vorbehandlung dem Wasser Mangandioxid zugesetzt und/oder Mangandioxid in dem Wasser in situ erzeugt wird und dass die Filtration des chemisch vorbehandelten Wassers mittels einer keramischen Membran erfolgt. Diese Merkmalskombination hat sich als besonders vorteilhaft erwiesen, worauf noch detailliert eingegangen wird.

Von den zwei angegebenen Varianten betreffend das Zusetzen von Mangandioxid zum radioaktive Nuklide enthaltenden Wasser ist erstere bevorzugt, also die Variante, gemäß der dem aufzureinigenden Wasser Mangandioxid direkt zugesetzt wird.

Besonders geeignet ist Mangandioxid, das als poröses Präzipität mit einer besonders großen inneren Oberfläche (spezifische Oberfläche > 350 qm/g, bestimmt nach BET) vorliegt. Da Mangandioxid altert und dabei an Porosität verliert, sollte es möglichst erst unmittelbar vor seiner Zugabe hergestellt werden.

Besonders bevorzugt wird hierzu das verwendete Mangandioxid durch Oxidation aus einer wässrigen, auf einen pH-Wert zwischen 4,5 und 9, insbesondere zwischen 7 und 9, eingestellten Mangansalzlösung gewonnen. Ein geeignetes Mangansalz ist beispielsweise Mangansulfat. Ein geeignetes Oxidationsmittel ist beispielsweise Kaliumpermanganat oder Natriumhypochlorit. Es ist auch möglich, das Kaliumpermanganat basisch einzustellen, beispielsweise mit NaOH, und das basische Kaliumpermanganat einer leicht sauren Mangansulfatlösung zuzusetzen. Auf diese Weise lässt sich die Stöchiometrie der Umsetzung besser kontrollieren.

Die Konzentration an Mangandioxid wird im Wasser bevorzugt auf einen Wert im Bereich zwischen 0.1 und 10 ppm eingestellt. Der optimale Wert ist dabei abhängig von der im aufzureinigenden Wasser enthaltenen Menge an radioaktiven Nukliden. Ein großer Überschuss an Mangandioxid sollte, soweit möglich, vermieden werden, da das Mangandioxid wieder abgetrennt werden muss. Ein leichter Überschuss kann dagegen vorteilhaft sein, da in Anwesenheit von Luft auch gegebenenfalls Eisen und sonstige enthaltene Metallionen mitadsorbiert werden können. Bevorzugt wird jedoch zuerst das Eisen abgetrennt, insbesondere durch Oxidation, und anschließend das Mangandioxid dazu gegeben.

In bevorzugten Ausführungsformen ist es möglich, dass die chemische Vorbehandlung des radioaktive Nuklide enthaltenden Wassers nicht nur die erwähnte Zugabe des Mangandioxids umfasst. So wird in besonders bevorzugten Ausführungsformen zusätzlich zum Mangandioxid auch ein Bariumsalz bei der Vorbehandlung verwendet. Wie eingangs erwähnt, kann das Bariumsalz z.B. die Ausfällung von Radium fördern.

Weiterhin ist auch die Zugabe weiterer Chemikalien oder von Luftsauerstoff denkbar, beispielsweise um im Wasser enthaltene sonstige Metalle und Metallionen zu oxidieren (z.B. zur bereits erwähnten Abtrennung von Eisen durch Oxidation). Bei einer solchen Maßnahme werden in der Regel auch gegebenenfalls im Wasser bereits enthaltene Mangan-Ionen oxidiert. Durch die Oxidation der bereits im Wasser enthaltenen Mangan-Ionen kann ein ungewünschter Überschuss an Mangandioxid produziert werden. Dies kann vermieden werden, indem die im Wasser enthaltene Menge an diesen Mangan-Ionen bestimmt und erst in Abhängigkeit davon die Menge des zuzugebenden Mangandioxids festgelegt wird. Die insgesamt benötigte Menge an Mangandioxid wird also bevorzugt zum einen durch Oxidation von im Wasser bereits enthaltenen Mangan-Ionen und zum anderen durch die Zugabe von extern synthetisiertem Mangandioxid bereitgestellt.

Besonders bevorzugt handelt es sich bei der verwendeten Membran um eine mikroporöse Membran.

Bei der verwendeten keramischen Membran handelt es sich besonders bevorzugt um eine flache Membranplatte mit innenliegenden Filtratabführkanälen und einer außenliegenden porösen Trennschicht. Derartige Membranen sind ausführlich beispielsweise in der DE 10 2006 008 453 A1 beschrieben. Die Beschreibung der Membranen in diesem Dokument wird hiermit durch Bezugnahme zum Inhalt der vorliegenden Beschreibung gemacht.

Es ist bevorzugt, dass für das vorliegende Verfahren Membranplatten verwendet werden, bei denen die Poren der Trennschicht einen mittleren Durchmesser zwischen 80 nm und 800 nm, insbesondere zwischen 100 nm und 300 nm, aufweisen.

Besonders bevorzugt kommen im Rahmen des vorliegenden Verfahrens Filtriereinheiten zum Einsatz, die mehrere flache Membranplatten umfassen. Geeignete Filtriereinheiten sind beispielsweise in der DE 10 2006 022 502 A1 beschrieben. Besonders geeignet sind die in der WO 2010/015374 beschriebenen Filtriereinheiten, die mindestens zwei keramische Filtermembranen umfassen. Auch der Inhalt der WO 2010/ 015374 A1 wird hiermit durch Bezugnahme zum Inhalt der vorliegenden Beschreibung gemacht.

Betrieben wird die verwendete keramische Filtermembran bevorzugt mit Unterdruck (100 mbar bis 600 mbar Unterdruck sind bevorzugt), es sind aber auch Varianten denkbar, bei denen die keramischen Filtermembranen im Überdruck betrieben werden.

Wie oben bereits erwähnt, hat sich insbesondere die Kombination aus dem Zusatz von Mangandioxid zum radioaktive Nuklide enthaltenden Wasser und der anschließenden Filtration mittels einer keramischen Filtermembran als besonders vorteilhaft erwiesen. Bei einer keramischen Filtermembran findet der eigentliche Trennprozess ausschließlich an der Oberfläche der Membran statt, weshalb dort vielfach auch eine spezielle Trennschicht vorgesehen ist, wie sie oben erwähnt ist. Problematisch ist dabei allerdings, dass sich die an der Oberfläche liegenden Poren der Membran sehr schnell zusetzen können. In der Praxis versucht man dem zwar durch regelmäßiges Rückspülen entgegenzuwirken, kann aber dennoch nicht verhindern, dass sich auf der Membranoberfläche eine im Betrieb stetig dicker werdende Schicht aus abgetrennten Teilchen und Stoffen absetzt. Aus diesem Grund hielt man es bislang für nicht denkbar, die eingangs beschriebenen tonnenschweren Sandfilter durch wesentlich kompaktere Keramikmembranen zu ersetzen. Sandfilter weisen im Gegensatz zu Keramikmembranen keine Poren auf, die sich zusetzen können, sie bestehen ja lediglich aus einer Schüttung feiner Sandpartikel und verstopfen deshalb nicht so leicht.

Diesem Problem konnte begegnet werden, indem im chemischen Vorbehandlungsschritt zur Abtrennung von radioaktiven Nukliden das erwähnte Mangandioxid eingesetzt wird. Mangandioxid ist selbst porös, insbesondere wenn es unter den oben genannten Bedingungen hergestellt wurde. Beispielsweise im aufzureinigenden Wasser enthaltene Radium-Ionen können sich adsorptiv in den Poren des zugegebenen Mangandioxids oder auf dessen äußerer Oberfläche festsetzen. Das Mangandioxid wird mitsamt diesen festgesetzten Ionen anschließend von der keramischen Filtermembran abgetrennt. Aufgrund seiner hohen Eigenporosität ist die sich auf der Oberfläche der Keramikmembran bildende Schicht aus Mangandioxid aber durchlässiger als Schichten aus nicht porösen Substanzen, so dass die Keramikmembranen weniger schnell an Effizienz verlieren und Rückspülprozesse seltener erforderlich sind. Es ergibt sich ein konstant hoher Flux ohne Verstopfung der Keramikmembran .

Durch die Kombination aus dem Mangandioxidzusatz und der Verwendung einer keramischen Membran werden oft so gute Ergebnisse erzielt, dass vielfach sogar auf die bei Verwendung von Sandfiltern unabdingbare nachgeschaltete Aufreinigung mittels einer Umkehrosmose verzichtet werden kann.

Ungeachtet dessen kann es bevorzugt sein, das nach der Filtration des chemisch vorbehandelten Wassers das Filtrat mittels mindestens eines druckgetriebenen Membrantrennverfahrens weiter aufgereinigt wird, wobei es sich bei dem druckgetriebenen Membrantrennverfahren bevorzugt um eine Umkehrosmose handelt. Weiterhin kann beispielsweise aber auch eine Nanofiltration oder eine Ultrafiltration die Umkehrosmose ergänzen oder ersetzen.

Es ist auch möglich, das mittels des mindestens einen druckgetriebenen Membrantrennverfahrens aufgereinigte Wasser mit Wasser zu mischen, das direkt aus der Keramikmembran austritt.

Das erfindungsgemäße Verfahren weist gegenüber den eingangs beschriebenen herkömmlichen Vorgehensweisen eklatante Vorteile auf. Zum einen sind die verwendeten Keramikmembranen wesentlich kompakter als die klassischen Sandfilter und haben üblicherweise einen deutlich höheren Flux, zum anderen entfällt das regelmäßig auftretende Problem der zu entsorgenden kontaminierten Sandfilter. Im Rahmen des vorliegend beschriebenen Verfahrens fallen lediglich vergleichsweise geringe Mengen an kontaminierten Braunsteinschlämmen an, die einfach entsorgt, gegebenenfalls sogar recycelt werden können. Die Filtration mit Keramikmembranen liefert direkt ab Inbetriebnahme ein Filtrat ohne Schwebstoffe und trennt radioaktive Nuklide, insbesondere Radium, effektiver ab. Die Sandfilter können eine solche Qualität, wenn überhaupt, erst nach einigen Wochen durch Anreicherungseffekte erzielen. Zudem werden bei den Sandfiltern beim Rückspülen wieder MnO₂ und radioaktive Nuklide in das Filtrat verschleppt.

Eine erfindungsgemäße Anlage zur Entfernung von radioaktiven Nukliden aus Wasser, insbesondere aus radiumhaltigem Grundwasser, umfasst
- mindestens einen Behälter zur chemischen Vorbehandlung des radioaktive Nuklide enthaltenden Wassers und
- mindestens eine Filtrationseinrichtung, um das chemisch vorbehandelte Wasser durch Filtration aufzureinigen.

Optional kann sie auch eine Vorrichtung zur Durchführung eines druckgetriebenen Membrantrennverfahrens zur weiteren Behandlung des durch Filtration aufgereinigten Wassers umfassen.

Dabei ist der mindestens eine Behälter zur chemischen Vorbehandlung des radiumhaltigen Wassers mit Vorratsbehältern gekoppelt, aus denen Braunstein oder ein Mangansalz und ein Oxidationsmittel (das in der Lage sein muss, das Mangansalz zu Mangandioxid zu oxidieren) in den Behälter zur chemischen Vorbehandlung eingespeist werden können. Bei der Filtrationseinrichtung handelt es sich um eine Vorrichtung umfassend mindestens eine keramische Filtermembran.

Behälter, die geeignet sind, radiumhaltiges Wasser chemisch zu behandeln, sind dem Fachmann bekannt und müssen nicht näher beschrieben werden. Gleiches gilt für Vorrichtungen zur Durchführung von druckgetriebenen Membrantrennverfahren.

Hinsichtlich geeigneter Vorrichtungen umfassend die mindestens eine keramische Filtermembran wird auf die bereits erwähnten DE 10 2006 022 502 A1 und WO 2010/015374 verwiesen.

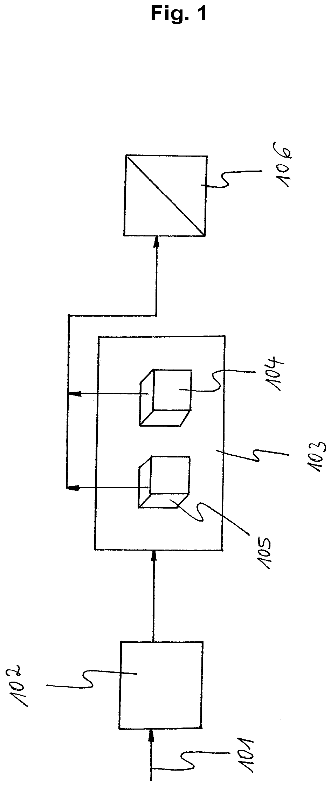

In **Fig. 1** sind die Grundzüge des Verfahrensablaufs bei einer bevorzugten Ausführungsform eines erfindungsgemäßen Verfahrens schematisch dargestellt. Ein Rohwasserstrom **101** tritt in die Behälter zur chemischen Vorbehandlung **102** ein. In dieser wird das Rohwasser zunächst mit Luftsauerstoff und dem Desinfektionsmittel Chlor oder Natriumhypochlorit (z.B. jeweils 0.1 bis 4 ppm freies Chlor) versetzt, anschließend wird eine Mangandioxidsuspension eingespeist. Nach einer Einwirkzeit kann das mit Mangandioxid versetzte Wasser in das Filtrationsbecken **103** überführt werden. In diesem sind zwei Filtrationseinrichtungen **104** und **105** angeordnet, die jeweils mehrere keramische Filtermembranen mit innenliegenden Filtratabführkanälen umfassen. Hier erfolgt die Abtrennung des Mangandioxids. Das anfallende Filtrat wird anschließend in die Umkehrosmoseeinheit **106** eingeleitet und dort abschließend aufgereinigt. Wie oben ausgeführt, ist dies aber nicht zwingend erforderlich.

Selbstverständlich ist es möglich, dass das erfindungsgemäße Verfahren neben den in Fig. 1 dargestellten Behandlungsschritten noch weitere Aufreinigungsschritte umfasst. So kann es beispielsweise vorteilhaft sein, zusätzlich Multimediafilter oder lonentauscher vorzusehen, jeweils abhängig von der Beschaffenheit des aufzureinigenden Wassers.

## Patentansprüche

1. Verfahren zur Gewinnung von Betriebs- oder Trinkwasser aus Wasser, das radioaktive Nuklide enthält, insbesondere aus radiumhaltigem Grundwasser, umfassend
• eine chemische Vorbehandlung des radioaktive Nuklide enthaltenden Wassers sowie
• eine Filtration des chemisch vorbehandelten Wassers,
wobei im Rahmen der chemischen Vorbehandlung dem Wasser Mangandioxid zugesetzt und/oder Mangandioxid im Wasser in situ erzeugt wird und wobei die Filtration des chemisch vorbehandelten Wassers mittels mindestens einer keramischen Filtermembran erfolgt.

2. Verfahren nach Anspruch 1, **dadurch gekennzeichnet, dass** das Mangandioxid durch Oxidation aus einer wässrigen, auf einen pH-Wert zwischen 4,5 und 9, insbesondere zwischen 7 und 9, eingestellten Mangansalzlösung gewonnen wird, bevor es dem Wasser zugesetzt wird.

3. Verfahren nach Anspruch 1 oder Anspruch 2, **dadurch gekennzeichnet, dass** die Konzentration an Mangandioxid im radiumhaltigen Wasser auf einen Wert im Bereich zwischen 0.1 ppm und 10 ppm eingestellt wird.

4. Verfahren nach einem der vorhergehenden Ansprüche, **dadurch gekennzeichnet, dass** das radioaktive Nuklide enthaltende Wasser im Vorbehandlungsschritt zusätzlich mit einem wasserlöslichen Bariumsalz versetzt wird.

5. Verfahren nach einem der vorhergehenden Ansprüche, **dadurch gekennzeichnet, dass** es sich bei der keramischen Filtermembran um eine flache Membranplatte mit innenliegenden Filtratabführkanälen und einer außenliegenden porösen Trennschicht handelt, wobei die Poren der Trennschicht bevorzugt einen mittleren Durchmesser zwischen 80 nm und 800 nm, besonders bevorzugt zwischen bevorzugt 100 nm und 300 nm, aufweisen.

6. Verfahren nach einem der vorhergehenden Ansprüche, **dadurch gekennzeichnet, dass** nach der Filtration des chemisch vorbehandelten Wassers das Filtrat mittels mindestens eines druckgetriebenen Membrantrennverfahrens aufgereinigt wird, wobei es sich bei dem druckgetriebenen Membrantrennverfahren bevorzugt um eine Umkehrosmose handelt.

7. Anlage zur Entfernung von radioaktiven Nukliden aus Wasser, insbesondere aus radiumhaltigem Grundwasser, umfassend
• mindestens einen Behälter zur chemischen Vorbehandlung des radiumhaltigen Wassers,
• mindestens eine Filtrationseinrichtung, um das chemisch vorbehandelte Wasser durch Filtration aufzureinigen sowie optional
• eine Vorrichtung zur Durchführung eines druckgetriebenen Membrantrennverfahrens zur weiteren Behandlung des durch Filtration aufgereinigten Wassers,
wobei der mindestens eine Behälter zur chemischen Vorbehandlung des radiumhaltigen Wassers mit Vorratsbehältern gekoppelt ist, aus denen Braunstein oder ein Mangansalz und ein Oxidationsmittel in den Behälter zur chemischen Vorbehandlung eingespeist werden können und wobei es sich bei der Filtrationseinrichtung um eine Vorrichtung umfassend mindestens eine keramische Filtermembran handelt.

## Claims

1. Process for obtaining process water or drinking water from water comprising radioactive nuclides, in particular from radium-containing groundwater, comprising
• a chemical pre-treatment of the water comprising radioactive nuclides and
• a filtration of the chemically pre-treated water,
wherein, in the context of the chemical pre-treatment, manganese dioxide is added to the water and/or manganese dioxide is generated in situ in the water and wherein the chemically pre-treated water is filtered by means of at least one ceramic filter membrane.

2. Process according to Claim 1, **characterized in that** the manganese dioxide is obtained by oxidation of an aqueous manganese salt solution adjusted to a pH between 4.5 and 9, particularly between 7 and 9, before said manganese dioxide is added to the water.

3. Process according to Claim 1 or Claim 2, **characterized in that** the concentration of manganese dioxide in the radium-containing water is adjusted to a value in the range between 0.1 ppm and 10 ppm.

4. Process according to any of the preceding claims, **characterized in that** the water containing radioactive nuclides is additionally treated with a water-soluble barium salt in the pre-treatment step.

5. Process according to any of the preceding claims, **characterized in that** the ceramic filter membrane is a flat membrane plate having inner filtrate discharge channels and an outer porous separation layer, wherein the pores of the separation layer preferably have an average diameter between 80 nm and 800 nm, particularly preferably between preferably 100 nm and 300 nm.

6. Process according to any of the preceding claims, **characterized in that**, after filtration of the chemically pre-treated water, the filtrate is purified by means of at least one pressure-driven membrane separation process, wherein the pressure-driven membrane separation process is preferably reverse osmosis.

7. System for removing radioactive nuclides from water, particularly from radium-containing groundwater, comprising
• at least one container for the chemical pre-treatment of the radium-containing water,
• at least one filtration device for purifying the chemically pre-treated water by filtration and optionally
• an apparatus for conducting a pressure-driven membrane separation process for the further treatment of the water purified by filtration,
wherein the at least one container for the chemical pre-treatment of the radium-containing water is coupled to reservoirs from which manganese dioxide or a manganese salt and an oxidizing agent can be fed into the container for the chemical pre-treatment and wherein the filtration device is an apparatus comprising at least one ceramic filter membrane.

## Revendications

1. Procédé pour la production d'eau industrielle ou d'eau potable à partir d'eau qui contient des nucléides radioactifs, en particulier à partir d'eau souterraine contenant du radium, comprenant
- un prétraitement chimique de l'eau contenant des nucléides radioactifs ainsi que
- une filtration de l'eau chimiquement prétraitée,
dans le cadre du prétraitement chimique, l'eau étant additionnée de dioxyde de manganèse et/ou du dioxyde de manganèse étant généré in situ dans l'eau et la filtration de l'eau chimiquement prétraitée ayant lieu au moyen d'au moins une membrane de filtration céramique.

2. Procédé selon la revendication 1, **caractérisé en ce que** le dioxyde de manganèse est produit par oxydation à partir d'une solution de sel de manganèse réglée à un pH entre 4,5 et 9, en particulier entre 7 et 9, avant l'addition d'eau.

3. Procédé selon la revendication 1 ou la revendication 2, **caractérisé en ce que** la concentration en dioxyde de manganèse dans l'eau contenant du radium est réglée à une valeur dans la plage entre 0,1 ppm et 10 ppm.

4. Procédé selon l'une quelconque des revendications précédentes, **caractérisé en ce que** l'eau contenant des nucléides radioactifs est additionnée, lors de l'étape de prétraitement, en plus d'un sel de baryum soluble dans l'eau.

5. Procédé selon l'une quelconque des revendications précédentes, **caractérisé en ce qu'**il s'agit, pour la membrane de filtration céramique, d'une plaque plate à membrane, présentant des canaux internes d'évacuation de filtrat et une couche de séparation externe poreuse, les pores de la couche de séparation présentant de préférence un diamètre moyen entre 80 nm et 800 nm, de manière particulièrement préférée entre 100 nm et 300 nm.

6. Procédé selon l'une quelconque des revendications précédentes, **caractérisé en ce qu'**après la filtration de l'eau chimiquement prétraitée, le filtrat est purifié au moyen d'un procédé de séparation sur membrane entraîné par pression, le procédé de séparation sur membrane entraîné par pression étant de préférence une osmose inverse.

7. Installation pour l'élimination de nucléides radioactifs de l'eau, en particulier d'eau souterraine contenant du radium, comprenant
- au moins un récipient pour le prétraitement chimique de l'eau contenant du radium,
- au moins un dispositif de filtration pour purifier l'eau chimiquement prétraitée par filtration ainsi qu'éventuellement
- un dispositif pour réaliser un procédé de séparation sur membrane entraîné par pression pour le traitement ultérieur de l'eau purifiée par filtration,
ledit au moins un récipient pour le prétraitement chimique de l'eau contenant du radium étant accouplé à des réservoirs à partir desquels du dioxyde de manganèse ou un sel de manganèse et un oxydant peuvent être injectés dans le récipient pour le prétraitement chimique et le dispositif de filtration étant un dispositif comprenant au moins une membrane de filtration céramique.
